# EUROPEAN PATENT APPLICATION

(11) **EP 1 209 175 A1**
(43) Date of publication of application: **29.05.2002**
(21) Application number: 00940863.4
(22) Date of filing: 28.06.2000
(51) Int. Cl.: C08F 210/02, C08F 214/28, C08F 214/22, C08L 23/06, C08L 27/12, C08K 5/04

(54) **FLUOROELASTOMER AND VULCANIZED MOLDING**

(30) Priority: 29.06.1999 JP 18367699; 27.03.2000 JP 2000086667
(71) Applicant: Daikin Industries, Ltd., Osaka-shi, Osaka 530-8323 (JP)
(72) Inventor: SAITO, Hideya, Yodogawa-seisakusho, Settsu-shi, Osaka 566-8585 (JP); HIGUCHI, Tetsuya, Yodogawa-seisakusho, Settsu-shi, Osaka 566-8585 (JP); KOMATSU, Satoshi, Yodogawa-seisakusho, Settsu-shi, Osaka 566-8585 (JP); TANAKA, Takayuki, Yodogawa-seisakusho, Settsu-shi, Osaka 566-8585 (JP)
(74) Representative: HOFFMANN - EITLE
(86) International application number: JP0004239
(87) International publication number: WO0100696

(57) **Abstract**

To provide a fluorine-containing elastomeric terpolymer which can be subjected to polyol vulcanization, has necessary and sufficient amine resistance while maintaining heat resistance, oil resistance and chemical resistance nearly equal to those of conventional fluorine-containing rubbers, and is suitable as an oil seal and hose for engine oil of car. The terpolymer contains 10 to 85 % by mole of ethylene unit, 14.9 to 50 % by mole of hexafluoropropylene unit and 0.1 to 45 % by mole of vinylidene fluoride unit.

## Description

### TECHNICAL FIELD

The present invention relates to a novel fluorine-containing elastomeric terpolymer (fluorine-containing rubber), a composition for vulcanization prepared therefrom, and a vulcanized molded article such as parts for oil seal.

### BACKGROUND ART

Fluorine-containing elastomers (fluorine-containing rubbers) such as vinylidene fluoride (VdF)/hexafluoropropylene (HFP) copolymer and VdF/HFP/tetrafluoroethylene (TFE) copolymer have been used as starting materials for various parts in the fields where severe conditions such as high temperature and exposure to various chemicals are demanded, for example, in the fields of automotive industry, aircraft industry, semiconductor industry, etc. because of excellent heat resistance, chemical resistance, oil resistance, and the like thereof.

In those fields of industries, major applications of the fluorine-containing rubbers are a sealing material and hose material for automotive-related equipment. Particularly rubber materials which are used for parts to be subject to exposure to engine oil are required to have not only heat resistance and oil resistance but also chemical resistance (amine resistance) to amine compounds, etc. which are added as a stabilizer to engine oil, ATF and differential gear oil. In recent years engine oil, ATF and differential gear oil are required to stand severer conditions as a result of demands for fuel saving and high performance of motor car. Therefore there is a tendency that an adding amount of the amine compounds, etc. is increasing, and conventional fluorine-containing rubbers as mentioned above cannot satisfy such requirements.

In such a situation, attention has been given to an elastomeric copolymer of ethylene (E)/HFP as a fluorine-containing rubber having amine resistance. The E/HFP copolymer has mechanical properties equal to those of conventional fluorine-containing rubbers and also heat resistance, solvent resistance and oil resistance approximate to those of conventional fluorine-containing rubbers.

It is expected that the fluorine-containing rubber prepared from the E/HFP copolymer is used effectively as various parts for motor car engine, transmission, chassis, etc. by utilizing the above-mentioned properties.

Typical examples of parts for engine system are those mentioned below.

### (Parts for engine proper)

Gaskets:
   Cylinder head gasket, cylinder head cover gasket, oil packing, timing belt cover gasket, etc.
Engine oil seals:
   O-ring, packing, etc.
Hoses for engine proper:
   Control hose, etc.
Others:
   Power piston packing, seal for cylinder liner, etc.

### (Parts for shaft)

Crank shaft seal, cam shaft seal, etc.

### (Parts for valve)

Valve stem oil seal, etc.

### (Parts for engine oil cooler)

Engine oil cooler hose, oil return hose, seal gasket, etc.

### (Parts for vacuum pump)

Vacuum pump oil hose, etc.

### (Parts for fuel pump)

Oil seal, diaphragm, valve, etc. for fuel pump

### (Parts for fuel hose)

Filler (neck) hose, fuel feeding hose, fuel return hose, vapor (evaporation) hose, vent (breather) hose, etc.

### (Parts for fuel tank)

In-tank hose, filler seal, tank packing, in-tank fuel pump mount, etc.

### (Parts for fuel tube)

Fuel tube, O-ring for connector of fuel tube, etc.

### (Parts for fuel injection system)

Injector cushion ring, injector seal ring, injector O-ring, pressure regulator diaphragm for fuel injection system, etc.

### (Parts for carburetor)

Valve of needle valve, piston packing of acceleration pump, flange gasket, control hose for carburetor, diaphragm for sensor of carburetor, etc.

### (Parts for composite air control system)

Valve seat for composite air control system, diaphragm for composite air control system, etc.

### (Parts for manifold)

Suction manifold packing, exhaust manifold packing, etc.

### (Parts for exhaust gas recirculation system)

Diaphragm for exhaust gas recirculation system, control hose for exhaust gas recirculation system, etc.

### (Parts for BPT)

Diaphragm, etc.

### (Parts for after burner)

Valve seat for prevention of after burning, etc.

### (Parts for throttle)

Throttle body packing, etc.

### (Parts for turbo charger)

Turbo oil feeding hose, turbo oil return hose, turbo air hose, inter cooler hose for turbo charger, turbine shaft seal for turbo charger, etc.

### (Others)

Power piston packing, cylinder liner seal, etc.

Typical examples of parts for transmission system are those mentioned below.

### (Parts for transmission)

Bearing seal, oil seal, O-ring, packing, etc. for transmission, hose for torque converter, etc.

### (Parts for automatic torque converter (AT))

Transmission oil seal, ATF oil seal, O-ring, packing and front pump seal for AT, etc.

Typical examples of parts for chassis are those mentioned below.

### (Parts for steering)

Power steering oil hose, etc.

### (Parts for break oil hose)

Hose, oil seal, O-ring, packing, etc. for break oil.

### (Parts for Master vac for break system)

Air valve, vacuum valve, diaphragm, etc. for Master vac.

### (Parts for master cylinder for break system)

Piston cap (rubber cap), etc. for master cylinder.

### (Parts for caliper)

Caliper seal, etc.

### (Parts for boot)

Boot, etc.

Further examples of other parts are, for instance, wheel bearing seal, gear box oil seal, differential oil seal, pinion seal, rear axle pinion seal, universal joint gasket, speed meter pinion seal, O-ring and oil seal for torque transmission, twin carburetor tube, etc.

When the E/HFP copolymer is used for producing a molded article, the copolymer must be subjected to vulcanizing. This is the same as in usual rubbers. While various vulcanization methods are known, in case of many fluorine-containing rubbers containing a VdF unit, polyol vulcanization in which a VdF unit is used as a cure site is adopted most since processability is excellent and an obtained molded article has a good compression set. Peroxide vulcanization to be carried out by employing a peroxide is also adopted, but since there is much staining of a metal die at molding, its use is limited to a specific case. In addition, as the case demands, polyamine vulcanization to be carried out by employing diamine is also adopted.

Journal of The Chemical Society of Japan, 1980 (1), pg. 112 describes that the E/HFP copolymers cannot be subjected to polyol vulcanization and are obliged to be subjected to peroxide vulcanization. This is because the polyol vulcanization cannot be carried out since the E/HFP copolymers substantially do not have a moiety (for example, the above-mentioned VdF unit) which is easily subject to attack of a nucleophilic reagent and is capable of becoming a cure site for the polyol vulcanization. On the other hand this feature gives an excellent amine resistance to the E/HFP copolymer.

In JP-A-6-248027, consideration is taken into a polyol vulcanization system which is capable of polyol vulcanization, has an amine resistance, and comprises 2 to 25 % by mole of ethylene (E), 16 to 30 % by mole of hexafluoropropylene (HFP) and 47 to 80 % by mole of vinylidene fluoride (VdF), and a terpolymer containing an increased amount of a VdF unit is proposed.

However studies made by the inventors of the present invention have made it clear that due to too large amount of VdF unit or too small amount of ethylene unit, such a terpolymer cannot sufficiently cope with the above-mentioned severer conditions during use thereof, particularly the amine resistance.

The inventors of the present invention have made intensive studies to obtain a fluorine-containing copolymer which can be subjected to polyol vulcanization and has necessary and sufficient amine resistance while maintaining heat resistance, oil resistance and chemical resistance nearly equal to those of conventional fluorine-containing rubbers, and as a result have found that the terpolymer obtained by copolymerizing ethylene, hxafluropropylene and vinylidene fluoride in a specific ratio has elastomeric property and satisfies the above-mentioned characteristics, and have completed the present invention.

### DISCLOSURE OF INVENTION

Namely the present invention relates to the fluorine-containing elastomeric terpolymer of 10 to 85 % by mole of ethylene unit, 14.9 to 50 % by mole of hexafluoropropylene (HFP) unit and 0.1 to 45 % by mole of vinylidene fluoride (VdF) unit.

Also the present invention relates to the fluorine-containing elastomeric terpolymer of 27 to 40 % by mole of ethylene unit, more than 45 % by mole and not more than 58 % by mole of vinylidene fluoride unit and the residual amount less than 28 % by mole of hexafluoropropylene unit.

A composition for vulcanization can be prepared by adding a vulcanizing agent and as the case demands, a vulcanization accelerator to those fluorine-containing elastomeric terpolymers. A preferable vulcanizing agent is a polyol vulcanizing agent.

The present invention also relates to the vulcanized molded article, for example, an oil seal which is obtained by molding and vulcanizing the composition for vulcanization.

### BEST MODE FOR CARRYING OUT THE INVENTION

One of the fluorine-containing elastomeric terpolymers of the present invention contains 10 to 85 % by mole of ethylene unit, 14.9 to 50 % by mole of HFP unit and 0.1 to 45 % by mole of VdF unit, preferably 10 to 65 % by mole of ethylene unit, 15 to 45 % by mole HFP unit and 0.1 to 45 % by mole of VdF unit. When an amount of the ethylene unit is too large, oil resistance is lowered and when the amount is too small, flexibility at low temperature (hereinafter referred to as "low temperature flexibility") is lowered. The amount of ethylene unit is preferably from 10 to 65 % by mole, particularly 30 to 65 % by mole. When the amount of HFP is too large, low temperature flexibility is lowered, and when the amount is too small, elastomeric property is lost and the terpolymer becomes in the form of resin. The amount of VdF unit is preferably from 5 to 45 % by mole, particularly 20 to 45 % by mole. When the amount of VdF unit is not more than 5 % by mole, cure sites for polyol vulcanization decrease and it is difficult to carry out the polyol vulcanization only. When the amount of VdF unit is more than 0.1 % by mole, vulcanization and molding can be carried out by the polyol vulcanization together with peroxide vulcanization. Also when the amount of VdF unit is more than 5 % by mole, the polyol vulcanization can be carried out solely. In order to enhance vulcanizability of polyol vulcanization, it is preferable to increase the amount of VdF unit to 20 % by mole or more. When the amount of VdF unit is more than 45 % by mole, amine resistance is lowered.

When considering amine resistance most and maintaining compatibility with vulcanizability of polyol vulcanization, it is preferable that the amount of VdF unit is from 5 to 35 % by mole, particularly 5 to 25 % by mole.

In order to attach importance to amine resistance and give necessary and sufficient vulcanizability of polyol vulcanization, the above-mentioned proportion range is proper. Particularly from the viewpoint of good balance between the amine resistance and the vulcanizability of polyol vulcanization, it is preferable that the proportion of ethylene/HFP/VdF (% by mole ratio, hereinafter the same) is 20 to 50/20 to 40/28 to 42.

When the vulcanizability of polyol vulcanization is increased and processability is enhanced even if the amine resistance is somewhat sacrificed, it is possible to use a fluorine-containing elastomeric terpolymer containing more than 45 % by mole of VdF unit, namely a novel copolymer of ethylene/HFP/VdF in a proportion of 27 to 40/14.9 to 28/more than 45 and not more than 58.

When attaching importance to low temperature flexibility, namely when the ethylene content is more than 65 % by mole and not more than 85 % by mole, it is preferable that the HFP unit is from 14.9 to 35 % by mole and the VdF unit is from 0.1 to 20 % by mole.

The fluorine-containing elastomeric terpolymer of the present invention can be prepared by usual radical polymerization method. The polymerization can be carried out by any of emulsion polymerization, suspension polymerization, solution polymerization and bulk polymerization. Among them, emulsion polymerization and suspension polymerization are advantageous since the polymerization is carried out industrially easily and a high molecular weight polymer is easily obtained.

Examples of the radical polymerization initiator which can be used for the radical polymerization are, for instance, an organic or inorganic peroxide, persulfate, azo compound, and the like.

Examples of the organic peroxide are, for instance, dialkyl peroxides such as 2,5-dimethyl-2,5-bis(t-butylperoxy)hexane and di-t-butyl peroxide; diacyl peroxides such as isobutyl peroxide, 3,5,5-trimethylhexanoyl peroxide, octanoyl peroxide, lauroyl peroxide, stearoyl peroxide and succinic acid peroxide; peroxy dicarbonates such as dinormalpropyl peroxydicarbonate, diisopropyl peroxydicarbonate, bis(4-t-butylcyclohexyl) peroxydicarbonate, di-2-ethoxyethyl peroxydicarbonate, di-2-ethylhexyl peroxydicarbonate and di-2-methoxybutyl peroxydicarbonate; peroxy esters such as 1,1,3,3-tetramethylbutyl peroxyneodecanoate, 1-cyclohexyl-1-methylethyl peroxyneodecanoate, t-hexyl peroxyneodecanoate, t-butyl peroxyneodecanoate, t-hexyl peroxypyvalate, t-butyl peroxypyvalate, 1,1,3,3-tetramethylbutyl peroxy-2-ethylhexanoate, 2,5-dimethyl-2,5-bis(2-ethylhexanoylperoxy)hexane, 1-cyclohexyl-1-methylethylperoxy-2-ethylhexanoate, t-hexylperoxy-2-ethylhexanoate, t-butylperoxy-2-ethylhexanoate, t-butylperoxy isobutyrate, t-hexylperoxyisopropyl monocarbonate, t-butylperoxy-3,5,5-trimethylhexanoate, t-butylperoxy laurate, t-butylperoxyisopropyl monocarbonate, t-butylperoxy-2-ethyhexyl monocarbonate and t-butylperoxy acetate; 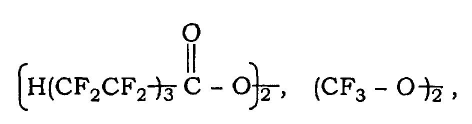 and the like.

Example of the inorganic peroxide is, for instance, hydrogen peroxide.

Examples of the persulfate are, for instance, ammonium persulfate, sodium persulfate, potassium persulfate, and the like.

In case of peroxide and persulfate, the initiator can be used in combination with a reducing agent. Examples of the reducing agent are, for instance, sodium, potassium or ammonium salt of sulfurous acid, hyposulfurous acid, pyrosulfurous acid, dithionous acid, thiosulfurous acid, phosphorous acid or hydrophosphorous acid; metal compounds to be easily oxidized such as ferrous salt, cuprous salt and silver salt; and the like.

Examples of the azo compounds are, for instance, cyano-2-propyl azoformamide, 1,1'-azobis(cyclohexane-1-carbonitrile), 2,2'-azobis(2-amidinopropane)dihydrochloride, 2,2'-azobis(2-methylbutyronitrile), 2,2'-azobisisobutyronitrile, 2,2'-azobis(2,4-dimethylvaleronitrile), 2,2'-azobis[N-(2-propenyl)-2-methylpropionamide], macro azo compound containing polydimethylsiloxane segment, 2,2'-azobis(2,4,4-trimethylpentane), 2,2'-azobis(4-methoxy-2,4-dimethylvaleronitrile), 4,4'-azobis(4-cyanovalerate), dimethyl 2,2'-azobis(isobutyrate), 2,2'-azobis[2-(2-imidazoline-2-yl)propane]dihydrochloride, 2,2'-azobis[2-(2-imidazoline-2-yl)propane]disulfate dihydrate, 2,2'-azobis[2-(2-imidazoline-2-yl)propane], 2,2'-azobis{2-methyl-N-[1,1-bis(hydroxymethyl)-2-hydroxyethyl]propionamide}, 2,2'-azobis{2-methyl-N-[1,1-bis(hydroxymethyl)ethyl]propionamide}, 2,2'-azobis[2-methyl-N-(2-hydroxyethyl)propionamide], 2,2'-azobisisobutylamide dihydrate, 2,2'-azobis[2-(hydroxymethyl)propionitrile], and the like.

An amount of the radical polymerization initiator is from 0.001 to 10 % by weight, preferably 0.01 to 5 % by weight on the basis of a total amount of the monomers.

In the preparation process of the present invention, a method of iodine transfer polymerization (cf. JP-A-53-125491) can also be used. In that case, when the polymerization is carried out in the presence of a compound represented by the formula (I):

R(I)x(Br)y (I)

wherein R is a saturated or un-saturated divalent fluoro hydrocarbon group or divalent chlorofluoro hydrocarbon group having 1 to 16 carbon atoms or a saturated or un-saturated divalent hydrocarbon group having 1 to 3 carbon atoms, each of x and y is 0, 1 or 2, x + y = 2, it is advantageous because a polymerization rate is increased.

Examples of the compound represented by the formula (I) are, for instance, 1,3-diiodoperfluoropropane, 1,3-diiodo-2-chloroperfluoropropane, 1,4-diiodoperfluorobutane, 1,5-diiodo-2,4-dichloroperfluorppentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1, 2-bromo-4-iodoperfluorobutene-1, substitution products having a substituent at various positions such as monoiodomonobromo-substituted product, diiodomonobromo-substituted product, monoiododibromo-substituted product and (2-iodoethyl)- and (2-bromoethyl)-substituted products of benzene, and the like.

Among them, from the viewpoint of polymerization reactivity, crosslinking reactivity and availability, 1,4-diiodoperfluorobutane and diiodomethane are preferably used.

Examples of other copolymerizable iodine-containing monomer are, for instance, iodinated perfluoro(vinyl ethers) such as perfluoro(6,6-dihydro-6-iodo-3-oxa-1-hexene) and perfluoro(5-iodo-3-oxa-1-pentene) which are described in JP-B-5-63482 and JP-A-62-12734.

In case of the emulsion polymerization, a polymerization temperature and time may be from 5° to 150°C and from 0.5 to 100 hours, respectively.

Also in case of the emulsion polymerization, a polymerization product is usually separated and collected by a coagulation method. In the coagulation step, the coagulation may be carried out by so-called salting by using a metal salt or in case of avoiding mixing of a metal, by adding an acid.

The fluorine-containing elastomeric terpolymer of the present invention may have the following physical properties.
Number average molecular weight (based on polystyrene): 5,000 to 500,000.
Weight average molecular weight: 10,000 to 4,000,000.
Glass transition temperature: -20°C to +10°C.

In preparation of the fluorine-containing elastomeric terpolymer of the present invention, other monomers can be further copolymerized to give a polymer comprising four or more monomers. Examples of the copolymerizable monomer are, for instance, tetrafluoroethylene (TFE), chlorotrifluoroethylene (CTFE), perfluoro(alkyl vinyl ether) (PAVE), trifluoroethylene, vinyl fluoride, propylene, and the like. Particularly TFE and CTFE are preferable from the point that a productivity can be enhanced. A proportion of those other copolymerizable monomers is up to 10 % by mole, preferably from 1 to 5 % by mole.

Further the present invention relates to the composition for vulcanization which comprises the above-mentioned fluorine-containing elastomeric terpolymer, a vulcanizing agent and as the case demands, a vulcanization accelerator.

An adding amount of the vulcanizing agent may be selected optionally in the same range as usual depending on kind of the vulcanizing agent and components of the fluorine-containing terpolymer (the number of cure sites, etc.). The adding amount is usually from 0.5 to 5 parts by weight (hereinafter referred to as "part") based on 100 parts of the terpolymer. Similarly an adding amount of the vulcanization accelerator may be selected in the same range as usual, and is usually from 0.2 to 10 parts based on 100 parts of the terpolymer.

As mentioned above, the fluorine-containing terpolymer of the present invention possesses enhanced amine resistance while properties of a fluorine-containing rubber are maintained, and the terpolymer is an elastomer capable of polyol vulcanization which is advantageous in processing.

Therefore polyol vulcanization method is most preferable for the composition for vulcanization of the present invention while it is a matter of course that peroxide vulcanization and polyamine vulcanization can be adopted.

As the vulcanizing agent for the polyol vulcanization method, there can be used compounds which have been known as the vulcanizing agent for fluorine-containing rubbers. For example, polyhydroxy compounds, particularly aromatic polyhydroxy compounds can be used preferably. Examples thereof are, for instance, 2,2-bis(4-hydroxyphenyl)propane (so-called "bisphenol A"), 2,2-bis(4-hydroxyphenyl)perfluoropropane (so-called "bisphenol AF"), resorcin, 1,3-trihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane (so-called "bisphenol B"), 4,4-bis(4-hydroxyphenyl)valerate, 2,2-bis(4-hydroxyphenyl)tetrafluorodichloropropane, 4,4'-dihydroxydiphenylsulfone, 4,4'-dihydroxydiphenylketone, tri(4-hydroxyphenyl)methane, 3,3',5,5'-tetrachlorobisphenol A, 3,3',5,5'-tetrabromobisphenol A, alkali metal salt or alkali earth metal salt thereof, and the like. However when coagulation of the terpolymer is carried out by using an acid, it is preferable that the above-mentioned metal salts are not used.

As the vulcanization accelerator for the polyol vulcanization, there can be used onium compounds known as the vulcanization accelerator for the polyol vulcanization of fluorine-containing rubbers. Examples thereof are, for instance, ammonium compounds such as tertiary ammonium salt, phosphonium compounds such as tertiary phosphonium salt, oxonium compounds, sulfonium compounds, and the like. Particularly the tertiary ammonium salt and tertiary phosphonium salt are preferable.

Examples of the tertiary ammonium salt are, for instance, 8-methyl-1,8-diaza-bicyclo[5.4.0]-7-undeceniumchloride, 8-methyl-1,8-diaza-bicyclo[5.4.0]-7-undeceniumiodide, 8-methyl-1,8-diaza-bicyclo[5.4.0]-7-undeceniumhydroxide, 8-methyl-1,8-diaza-bicyclo[5.4.0]-7-undecenium-methylsulfate, 8-ethyl-1,8-diaza-bicyclo[5.4.0]-7-undeceniumbromide, 8-propyl-1,8-diaza-bicyclo[5.4.0]-7-undeceniumbromide, 8-dodecyl-1,8-diaza-bicyclo[5.4.0]-7-undeceniumchloride, 8-dodecyl-1,8-diaza-bicyclo[5.4.0]-7-undeceniumhydroxide, 8-eicosyl-1,8-diaza-bicyclo[5.4.0]-7-undeceniumchloride, 8-tetracosyl-1,8-diaza-bicyclo[5.4.0]-7-undeceniumchloride, 8-benzyl-1,8-diaza-bicyclo[5.4.0]-7-undeceniumchloride, 8-benzyl-1,8-diaza-bicyclo[5. 4. 0]-7-undeceniumhydroxide, 8-phenethyl-1,8-diaza-bicyclo[5.4.0]-7-undeceniumchloride, 8-(3-phenylpropyl)-1,8-diaza-bicyclo[5.4.0]-7-undeceniumchloride, and the like; phenyltrimethylammonium chloride, phenyltrimethylammonium bromide, phenyltrimethylammoniumhydrogen sulfate, phenyltriethylammonium chloride, phenyltrioctylammonium bromide, and the like; 1,8-diazabicyclo[5.4.0]-7-undecenium octanoate, 1,8-diazabicyclo[5.4.0]-7-undecenium nonanoate, 1,8-diazabicyclo[5.4.0]-7-undecenium decanoate, 1,6-diazabicyclo[4.3.0]-5-nonenium octanoate, tetrabutylammonium octanoate, tetrabutylammonium nonanoate, trioctylmethylammonium octanoate, trioctylmethylammonium nonanoate, and the like; 1,8-diazabicyclo[5.4.0]-7-undecenium formate, 1,6-diazabicyclo[4.3.0]-5-nonenium formate, tetrabutylammonium formate, trioctylmethylammonium formate, and the like; tetrabutylammoniumhydrogen sulfate, tetramethylammoniumhydrogen sulfate, benzyltributylammoniumhydrogen sulfate, trioctylmethylammoniumhydrogen sulfate, 1,8-diazabicyclo[5.4.0]-7-undecenium hydrogen sulfate, 8-methyl-1,8-diazabicyclo[5.4.0]-7-undecenium hydrogen sulfate, and the like. Among them, organic tertiary ammonium hydrogen sulfates such as tetrabutylammoniumhydrogen sulfate are preferable from the viewpoint of enabling vulcanizability to be enhanced.

Examples of the tertiary phosphonium salt are, for instance, tetrabutylphosphnium chloride, benzyltriphenylphosphonium chloride, benzyltrimethylphosphonium chloride, benzyltributylphosphonium chloride, tetrabutylphosphonium benzotriazole salt, tetrapropylphosphonium benzotriazole salt, triphenylbenzylphosphonium benzotriazole salt, and the like.

Further in order to enhance vulcanizability, for example, dimethyl sulfone, diethyl sulfone, dibutyl sulfone, methyl ethyl sulfone, diphenyl sulfone, sulfolane, and the like; 1,8-diazabicyclo[5.4.0]-7-undecene, 1,5-diazabicyclo[4.3.0]-5-nonene, triethylamine, tributylamine, diphenylamine, ethyleneimine, piperidine, morpholine, pyridine, benzotriazole, p-dimethylaminopyridine, 1,4-diazabicyclo[2.2.2]octane, triphenyl phosphine, tributyl phosphine, trioctyl phosphine, triphenyl phosphite, triethyl phosphite, triphenyl phosphate, tributyl phosphate, triphenyl phosphine oxide, trioctyl phosphine oxide, or the like may be added.

An adding amount of the polyol vulcanizing agent (for example, polyhydroxy compound) is usually from 0.5 to 5 parts, preferably from 1 to 2 parts based on 100 parts of the terpolymer. An adding amount of the vulcanization accelerator (for example, onium compound) is usually from 0.2 to 10 parts, preferably from 0.5 to 5 parts based on 100 parts of the terpolymer.

The polyol vulcanization can be carried out in the same manner as in conventional method. For example, there is a method of kneading with rolls the terpolymer of the present invention, a vulcanizing agent and as the case demands, a vulcanization accelerator and further other optional additives, putting the mixture in a metal die, and carrying out primary vulcanization under pressure and then secondary vulcanization. For the kneading, an internal mixer, Banbury mixer, or the like can be used preferably. Generally conditions for the primary vulcanization are a temperature of from 100° to 200°C, a time of from 10 to 180 minutes and a pressure of from about 2 MPa to about 10 MPa, and conditions for the secondary vulcanization are a temperature of from 150° to 300°C and a time of from about 30 minutes to about 30 hours.

One of the features of the composition for vulcanization of the present invention is that the polyol vulcanization can be carried out easily. As a result, excellent characteristics and rubber processability such as little contamination of a metal die, excellent heat resistance of an obtained vulcanized molded article and easy adhesion to a metal can be obtained.

As mentioned above, the composition for vulcanization of the present invention can be subjected to peroxide vulcanizing and polyamine vulcanizing in addition to the polyol vulcanizing.

For the peroxide vulcanization, usually organic peroxides which easily generate a peroxy radical in the presence of heat or an oxidation-reduction system are used preferably. Examples thereof are, for instance, 1,1-bis(t-butylperoxy)-3,5,5-trimethylcyclohexane, 2,5-dimethylhexane-2,5-dihydro peroxide, di-t-butyl peroxide, t-butylcumyl peroxide, dicumyl peroxide, 2,5-dimethyl-2,5-bis(t-butylperoxy)hexane, α,α-bis(t-butylperoxy)-p-diisopropyl benzene, 2,5-dimethyl-2,5-di(t-butylperoxy)-hexine-3, benzoyl peroxide, t-butyl peroxybenzene, t-butyl peroxybenzoate, 2,5-dimethyl-2,5-di(benzoylperoxy)-hexane, t-butyl peroxymaleate, t-butylperoxy isopropylcarbonate, and the like. Among them, dialkyl peroxides, particularly t-butyl peroxybenzoate, 2,5-dimethyl-2,5-di(t-butylperoxy)-hexane and dicumyl peroxide are preferable.

An adding amount of the organic peroxide may be optionally determined in consideration of an amount of an active -O-O- bond in the organic peroxide and a decomposition temperature thereof, and is usually from 0.05 to 10 parts, preferably from 1.0 to 5 parts based on 100 parts of the terpolymer.

In the peroxide vulcanization with the organic peroxide, curing (vulcanization) is accelerated remarkably by using a vulcanization aid (vulcanization accelerator). Examples of the vulcanization aid are those which have been used so far, for instance, triallyl cyanurate, triallyl isocyanurate, triacryl formal, triallyl trimellitate, N,N'-m-phenylenebismaleimide, dipropargyl terephthalate, diallyl phthalate, tetraallyl terephthalateamide, triallyl phosphate, and the like. Particularly triallyl isocyanurate is preferable. An adding amount thereof is usually from 0.1 to 10 parts, preferably from 0.5 to 5 parts based on 100 parts of the terpolymer.

The peroxide vulcanization can be carried out in the same manner as in conventional method. For example, there is a method of kneading with rolls the terpolymer of the present invention, a vulcanizing agent and as the case demands, a vulcanization accelerator and further other optional additives, putting the mixture in a metal die, and carrying out primary vulcanization under pressure and -then secondary vulcanization. Generally conditions for the primary vulcanization are a temperature of from 100° to 200°C, a time of from 5 to 60 minutes and a pressure of from about 2 MPa to about 10 MPa, and conditions for the secondary vulcanization are a temperature of from 150° to 300°C and a time of from about 30 minutes to about 30 hours.

A polyamine compound to be used for the polyamine vulcanization not only acts as a vulcanizing agent but also improves mechanical properties of a vulcanized article (for example, strength at break, etc.). Examples thereof are, for instance, monoamines such as ethylamine, propylamine, butylamine, benzylamine, allylamine, n-amylamine and ethanolamine; diamines such as ethylenediamine, trimethylenediamine, tetramethylenediamine, hexamethylenediamine and 3,9-bis(3-aminopropyl)-2,4,8,10-tetraoxaspiro[5,5]undecane; and polyamines such as diethylenetriamine, triethylenetetramine, tetraethylenepentamine and pentaethylenehexamine. Particularly amine compounds having two or more end amino groups are preferable. An adding amount thereof is usually from 0.5 to 10 parts, preferably from 1 to 5 parts based on 100 parts of the terpolymer.

The polyamine vulcanization can be carried out in the same manner as in conventional method. For example, there is a method of kneading with rolls the terpolymer of the present invention, a vulcanizing agent and as the case demands, a vulcanization accelerator and further other optional additives, putting the mixture in a metal die, and carrying out primary vulcanization under pressure and then secondary vulcanization. Generally conditions for the primary vulcanization are a temperature of from 100° to 200°C, a time of from 5 to 120 minutes and a pressure of from about 2 MPa to about 10 MPa, and conditions for the secondary vulcanization are a temperature of from 150° to 300°C and a time of from about 30 minutes to about 30 hours.

As mentioned above, the vulcanized molded article of the present invention possesses excellent heat resistance, oil resistance, amine resistance and chemical resistance, and can be used for various parts in automotive industry, airplane industry and semiconductor industry. The molded article is suitably used particularly for parts for oil seal, for example, hose and oil seal for engine oil of automotive by making the best use of its excellent heat resistance, oil resistance and amine resistance. Examples of other suitable applications are mentioned below.

### Applications of molded articles:

Packing, O-ring, hose, other sealing material, diaphragm and valve having amine resistance, oil resistance, chemical resistance, steam resistance and weather resistance in transportation means such as automotive, ship and airplane; similar packing, O-ring, sealing material, diaphragm, valve, hose, roll and tube in chemical plant; similar packing, O-ring, hose, sealing material, belt, diaphragm, valve, roll and tube in foods plant and foods processing machine (including domestic appliances); similar packing, O-ring, hose, sealing material, diaphragm, valve and tube in nuclear plant; similar packing, O-ring, hose, sealing material, diaphragm, valve, roll, tube, mandrel, cable, flexible joint, belt, rubber plate, weatherstrip, roll blade for PPC copying machine, etc. in general industrial parts.

More concretely there are the following applications.

### (i) Automotive applications

The molded article of the present invention can be used for the above-mentioned car-related applications, more concretely for the following applications.
(1) For sealing
   Crank shaft seal
   Gear box seal
   Power piston packing
   Cylinder liner seal
   Valve stem seal
   Front pump seal for automatic transmission
   Rear axle pinion seal
   Gasket for universal joint
   Pinion seal for speed meter
   Piston cup for foot brake
   O-ring and oil seal for torque transmission
   Seal for after-burner for exhaust gas
   Bearing seal
   Differential seal
   Wheel bearing seal
(2) For hose
   EGR tube
   Twin-carburetor tube
(3) For diaphragm
   Diaphragm for sensor of carburetor
(4) Others
   Vibration-proof rubber (engine mount, exhaust system, etc.)
   Hose for after burner

### (ii) Applications in chemical industries

(1) For sealing
   Seals for pump, flow meter and pipe for chemicals
   Seal for heat exchanger
   Packing of glass cooler for sulfuric acid manufacturing equipment
   Seals for sprinkler and transfer pump for agricultural chemicals
   Seal for gas pipe
   Seal for plating solution
   Packing for high temperature vacuum dryer
   Roll seal of belt for paper making
   Seal for fuel battery
   Joint seal for air duct
(2) For roll
   Roll having trichlene resistance (for dyeing of fiber)
(3) Other applications
   Acid resistant hose (for concentrated sulfuric acid)
   Packing for joint of tubes for gas chromatograph and pH meter
   Chlorine gas transfer hose
   Rainwater drain hoses for benzene and toluene reservoir tanks
   Seal, tube, diaphragm and valve parts for analyzer and physical and chemical appliances

### (iii) Applications in industrial machinery

(1) For sealing
   Seals for hydraulic and lubricating machine
   Bearing seal
   Seal for dry copying machine
   Seals for window, etc. of dry cleaner
   Seal for equipment for concentrating uranium hexafluoride
   Seal (vacuum) valve for cyclotron
   Seal for automatic packaging machine
(2) Other applications
   Rolls, scraper, tube and valve parts for printing equipment
   Rolls, scraper, tube and valve parts for coating equipment
   Ink tube, roll and belt for printer
   Belt and rolls for dry copying machine
   Diaphragms for pumps for analyzing sulfurous acid gas and chlorine gas in the air (environmental pollution-related meters)
   Rolls and belt for printer
   Squeeze rolls for pickling

### (iv) Airplane applications

Valve stem seal for jet engine
Fuel feeding hose, gasket and O-ring
Rotating shaft seal
Gasket for hydraulic equipment
Seal for fire wall

### (v) Ship applications

Stern seal for screw propeller shaft
Suction and exhaust valve stem seals for diesel engine
Valve seal for butterfly valve
Stem seal for butterfly valve

### (vi) Food and medicine applications

Seal for plate heat exchanger
Solenoid valve seal for vending machine
Plugs for chemicals

### (vii) Electrical applications

Insulation oil cap for a train of the Shikansen line
Venting seal for liquid ring transformer
Jacket for oil well cable

Further the molded article of the present invention can be used for O-ring, sealing material, hose, tube, diaphragm, roll, lining and coating in equipment for producing semiconductor, liquid crystal panel, plasma display panel, plasma address liquid crystal panel, field emission display panel, substrate for solar battery, etc., for example, CVD equipment, etching equipment, oxidation/diffusion equipment, sputtering equipment, ashing equipment, ion implantation equipment, exhausting equipment, and the like which require plasma resistance; O-ring, sealing material, hose, tube, diaphragm and roll in wet etcher, cleaning equipment, pipes for chemicals, gas pipes, and the like which require chemical resistance; and further O-ring, sealing material, hose, tube, diaphragm and roll to be used on parts of the mentioned equipment which are required to be free from dust and metal.

Examples of other applications where chemical resistance is required are O-ring, sealing material, hose, tube, diaphragm of pump and wafer transferring rolls for resist developing solution, releasing solution and wafer cleaning solution in production equipment for semiconductor, liquid crystal panel, plasma display panel, etc.

The present invention is then explained concretely by means of examples, but is not limited thereto.

### EXAMPLE 1

A 3-liter stainless steel autoclave was charged with 1.5 liter of ion-exchanged water and 150.0 g of ammonium perfluorooctanoate and the atmosphere inside the autoclave was replaced with nitrogen gas sufficiently. The autoclave was then charged with 500.0 g of hexafluoropropylene (HFP) in a vacuum state, the inside temperature of the autoclave was increased to 65°C, and a gas mixture of ethylene/vinylidene fluoride (VdF) (50/50 % by mole) was introduced under pressure until the pressure inside the autoclave was increased to 30 kg/cm²G. While stirring a system with an electromagnetic stirrer, the system was allowed to stand until the inside pressure became constant. Then 0.5 g of ammonium persulfate (APS) in an aqueous solution was introduced with pressurized nitrogen gas to initiate a reaction. Since the inside pressure was decreased with the advance of the reaction, the pressure reduction was made up for by adding the gas mixture of ethylene/VdF (50/50 % by mole). The reaction was continued for 26.6 hours at constant pressure and temperature. APS was added in a total amount of 2.5 g until completion of the reaction.

After the completion of the reaction, the remaining monomer was released into the air. The obtained emulsified dispersion was coagulated with an aqueous solution of calcium chloride and then after washing with ion-exchanged water, dried at 120°C until a constant value was obtained, and 529 g of an elastomeric polymerization product was obtained.

Components, molecular weight and glass transition temperature of the polymerization product were determined by analyzing methods of ¹H-NMR elementary analysis, GPC and DSC. As a result, the product was a terpolymer of 40.0 % by mole of ethylene unit, 38.9 % by mole of HFP unit and 21.1 % by mole of VdF unit, a number average molecular weight (based on polystyrene) was 85,000, a weight average molecular weight was 2,200,000 and a glass transition temperature was -1.7°C.

### EXAMPLE 2

A 3-liter stainless steel autoclave was charged with 1.5 liter of ion-exchanged water and 75.0 g of ammonium perfluorooctanoate and the atmosphere inside the autoclave was replaced with nitrogen gas sufficiently. The autoclave was then charged with 500.0 g of hexafluoropropylene (HFP) in a vacuum state, the inside temperature of the autoclave was increased to 50°C, and a gas mixture of ethylene/vinylidene fluoride (VdF) (50/50 % by mole) was introduced under pressure until the pressure inside the autoclave was increased to 2.94 MPa·G (30 kgf/cm²G). While stirring a system with an electromagnetic stirrer, the system was allowed to stand until the inside pressure became constant. Then 30.0 g of an aqueous solution of 10 % by weight of ammonium persulfate (APS) was introduced under pressure with a plunger pump to initiate a reaction. Since the inside pressure was decreased with the advance of the reaction, the pressure reduction was made up for by adding the gas mixture of ethylene/VdF (50/50 % by mole). The reaction was continued for 72 hours at constant pressure and temperature. The aqueous solution of APS was added in a total amount of 139.0 g until completion of the reaction.

After the completion of the reaction, the remaining monomer was released into the air. The obtained emulsified dispersion was coagulated with an aqueous solution of calcium chloride and then after washing with ion-exchanged water, dried at 120°C until a constant value was obtained, and 460 g of an elastomeric polymerization product was obtained.

As a result of analysis of the polymerization product made in the same manner as in Example 1, the product was a terpolymer of 47.2 % by mole of ethylene unit, 34.9 % by mole of HFP unit and 17.9 % by mole of VdF unit, a number average molecular weight (based on polystyrene) was 50,000, a weight average molecular weight was 470,000 and a glass transition temperature was -4.7°C.

### EXAMPLES 3 and 4

The elastomeric terpolymers prepared in Examples 1 and 2, respectively, a carbon black, a peroxide vulcanizing agent and a vulcanization accelerator were mixed in amounts shown in Table 1 and kneaded by using an open roll at ordinary temperature. Any of the components was good in adhesion to the roll and easy to knead. The obtained rubber compound was put in a metal die, and subjected to primary vulcanizing by press vulcanization and then secondary vulcanizing by vulcanization in an oven to give a vulcanized molded article.

Physical properties in normal state, oil resistance, amine resistance and heat resistance of the obtained vulcanized molded article were measured by the following methods. The results are shown in Table 1.

### (Physical properties in normal state)

According to JIS K6301, JIS-A hardness (Hs), 100 % modulus (M100), tensile strength at break (TB) and tensile elongation at break (EB) are measured.

### (Resistance to engine oil)

A change in Hs (degree), a change in TB (%), a change in EB (%) and a change in volume (%) after dipping in ASTM SF105G oil at 175°C for 168 hours are measured.

### (Heat resistance)

A change in Hs (degree), a change in TB (%) and a change in EB (%) after exposing in the air at 230°C for 70 hours are measured.

### (Amine resistance)

A change in Hs (degree), a change in TB (%), a change in EB (%) and a change in volume (%) after dipping in ethylenediamine at room temperature for 16 hours are measured.

In Table 1, each of additives represents the followings.
PERBUTYL Z: Peroxide vulcanizing agent available from NOF CORPORATION
TAIC: Triallyl isocyanate (vulcanization accelerator available from Nippon Kasei Chemical Co., Ltd.)
MA150: MgO (acid acceptor available from Kyowa Kagaku Kabushiki Kaisha
Thermax N-990: Carbon black available from Cancarb Co., Ltd.

**TABLE 1**

| | Ex. 3 | Ex. 4 |
|---|---|---|
| Composition for vulcanization (part by weight) | | |
| Elastomeric terpolymer | 100 (Ex. 1) | 100 (Ex. 2) |
| PERBUTYL Z | 3.7 | 3.7 |
| TAIC | 2.5 | 2.5 |
| MA150 | 3 | 3 |
| Thermax N-990 | 30 | 30 |

| Physical properties of vulcanized molded article | | |
|---|---|---|
| Physical properties in normal state | | |
| Hs (JIS A) | 72 | 72 |
| M100 (MPa) | 4.7 | 5.1 |
| TB (MPa) | 12.7 | 16.7 |
| EB (%) | 220 | 250 |

| Engine oil resistance | | |
|---|---|---|
| Change in Hs (degree) | - | -3 |
| Change in TB (%) | - | -36.7 |
| Change in EB (%) | | -35.3 |
| Change in volume (%) | - | 3.7 |

| Heat resistance | | |
|---|---|---|
| Change in Hs (degree) | - | 6 |
| Change in TB (%) | - | -19.8 |
| Change in EB (%) | - | -37.2 |

| Amine resistance | | |
|---|---|---|
| Change in Hs (degree) | 0 | -3 |
| Change in TB (%) | 2.3 | -1.8 |
| Change in EB (%) | -6.2 | 0.2 |
| Change in volume (%) | 3.1 | 2.8 |

### EXAMPLES 5 and 6

The elastomeric terpolymers prepared in Examples 1 and 2, respectively, a carbon black, a polyol vulcanizing agent and a vulcanization accelerator were mixed in amounts shown in Table 2 and kneaded by using an open roll at ordinary temperature. Any of the components was good in adhesion to the roll and easy to knead. The obtained rubber compound was put in a metal die, and subjected to primary vulcanizing by press vulcanization and then secondary vulcanizing by vulcanization in an oven to give a vulcanized molded article.

Physical properties in normal state and heat resistance of the obtained vulcanized molded article were measured in the same manner as in Example 4. The results are shown in Table 2.

In Table 2, each of additives represents the followings. Bisphenol AF: Polyol vulcanizing agent
TBAHS: Tetrabutylammoniumhydrogen sulfate (vulcanization accelerator)
Ca(OH)₂: available from Ohmi Kagaku Kabushiki Kaisha

**TABLE 2**

| | Ex. 5 | Ex. 6 |
|---|---|---|
| Composition for vulcanization (part by weight) | | |
| Elastomeric terpolymer | 100 (Ex. 1) | 100 (Ex. 2) |
| Bisphenol AF | 1.5 | 1.5 |
| TBAHS | 0.7 | 0.7 |
| Ca(OH)₂ | 6 | 6 |
| MA150 | 3 | 3 |
| Thermax N-990 | 30 | 30 |

| Physical properties of vulcanized molded article | | |
|---|---|---|
| Physical properties in normal state | | |
| Hs (JIS A) | 77 | 80 |
| M100 (MPa) | 4.2 | 7.8 |
| TB (MPa) | 13.4 | 13.9 |
| EB (%) | 280 | 180 |

| Heat resistance | | |
|---|---|---|
| Change in Hs (degree) | - | 0 |
| Change in TB(%) | - | -11.0 |
| Change in EB (%) | - | -10.4 |

### EXAMPLES 7 to 14

A 100-ml stainless steel autoclave was charged with 50 ml of ion-exchanged water and 2.5 g of ammonium perfluorooctanoate and the atmosphere inside the autoclave was replaced with nitrogen gas sufficiently. The autoclave was then charged under pressure in a vacuum state with hexafluoropropylene (HFP), ethylene and vinylidene fluoride (VdF) in amounts shown in Table 3. Then 1.5 g of an aqueous solution of 10 % by weight of ammonium persulfate (APS) was introduced under pressure with a plunger pump to initiate a reaction. During the reaction the autoclave was set in a shaking machine provided with temperature control means, and was subjected to shaking for two hours at intervals of 125 times per minute while the inside temperature was maintained at 65°C.

After completion of the reaction, coagulation, washing and drying were carried out in the same manner as in Example 1, and elastomeric polymerization products were obtained in amounts shown in Table 3.

The obtained products were analyzed in the same manner as in Example 1. The results are shown in Table 3.

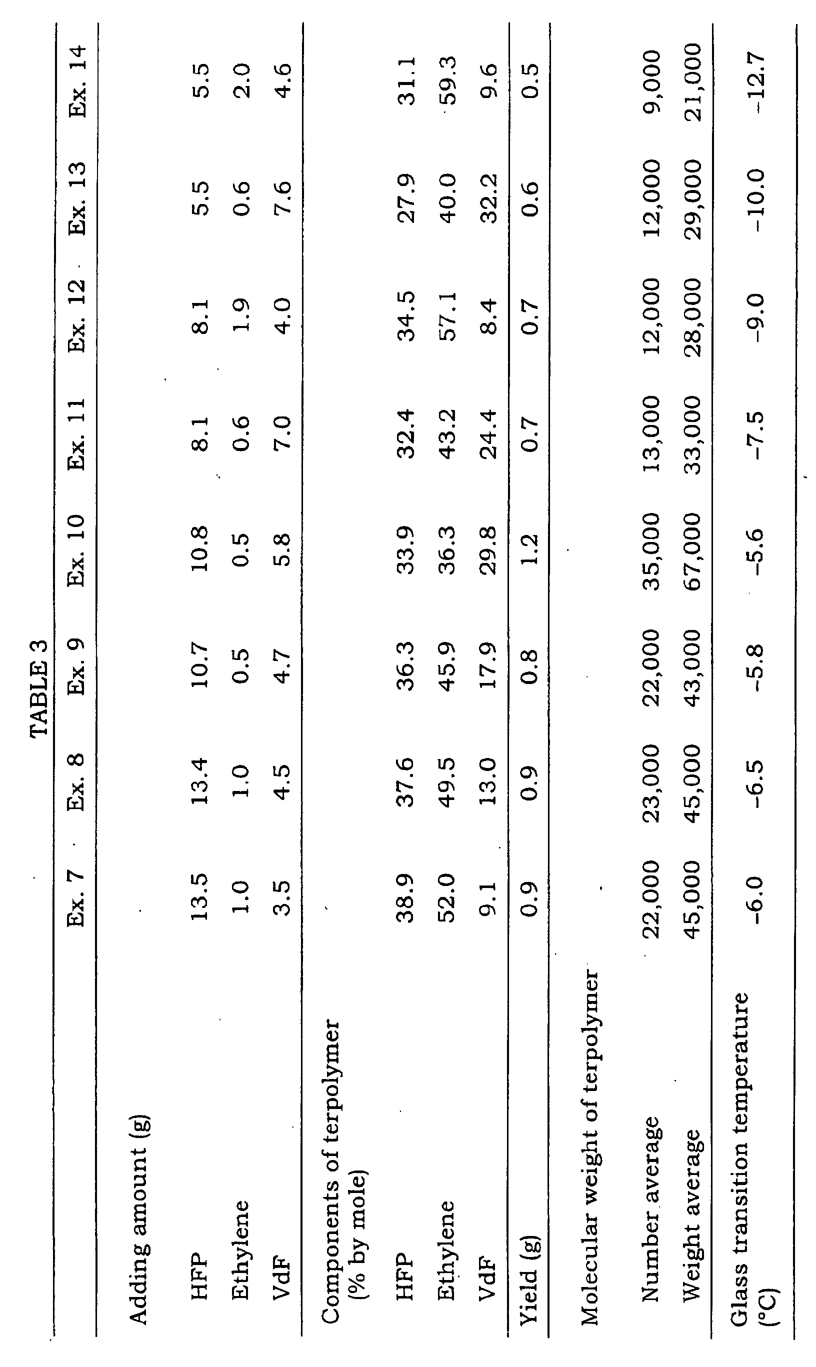

### INDUSTRIAL APPLICABILITY

According to the present invention, a fluorine-containing copolymer which can be subjected to polyol vulcanization and has necessary and sufficient amine resistance while maintaining heat resistance, oil resistance and chemical resistance nearly equal to those of conventional fluorine-containing rubbers can be provided, and a vulcanized molded article suitable, for example, as an oil seal and hose for engine oil, ATF and differential gear oil can be provided.

## Claims

1. A fluorine-containing elastomeric terpolymer of 10 to 85 % by mole of ethylene unit, 14.9 to 50 % by mole of hexafluoropropylene unit and 0.1 to 45 % by mole of vinylidene fluoride unit.

2. The fluorine-containing elastomeric terpolymer of Claim 1, wherein the terpolymer contains 10 to 65 % by mole of ethylene unit, 15 to 45 % by mole of hexafluoropropylene unit and 0.1 to 45 % by mole of vinylidene fluoride unit.

3. The fluorine-containing elastomeric terpolymer of Claim 1 or 2, wherein a proportion of vinylidene fluoride unit is from 5 to 45 % by mole.

4. The fluorine-containing elastomeric terpolymer of Claim 1 or 2, wherein a proportion of vinylidene fluoride unit is from 5 to 35 % by mole.

5. The fluorine-containing elastomeric terpolymer of Claim 1 or 2, wherein a proportion of vinylidene fluoride unit is from 5 to 25 % by mole.

6. The fluorine-containing elastomeric terpolymer of Claim 1 or 2, wherein a proportion of vinylidene fluoride unit is from 20 to 45 % by mole.

7. The fluorine-containing elastomeric terpolymer of any of Claims 1 to 6, wherein a proportion of ethylene unit is from 30 to 65 % by mole.

8. The fluorine-containing elastomeric terpolymer of Claim 1, wherein the terpolymer contains more than 65 % by mole and 85 % by mole or less of ethylene unit, 14.9 to 35 % by mole of hexafluoropropylene unit and 0.1 to 20 % by mole of vinylidene fluoride unit.

9. A fluorine-containing elastomeric terpolymer of 27 to 40 % by mole of ethylene unit, more than 45 % by mole and 58 % by mole or less of vinylidene fluoride unit and a residual amount less than 28 % by mole of hexafluoropropylene unit.

10. A composition for vulcanization which comprises the fluorine-containing elastomeric terpolymer of any of Claims 1 to 9 and a vulcanizing agent.

11. The composition of Claim 10, which contains a vulcanization accelerator.

12. The composition of Claim 10 or 11, wherein the vulcanizing agent is a polyol vulcanizing agent.

13. A vulcanized molded article produced by molding and vulcanizing the composition for vulcanization of any of Claims 10 to 12.

14. The vulcanized molded article of Claim 13, which is used for parts for oil seal.
